# EUROPEAN PATENT APPLICATION

(11) **EP 4 773 412 A1**
(43) Date of publication of application: **08.07.2026**
(21) Application number: 25867225.2
(22) Date of filing: 09.07.2025
(51) Int. Cl.: H01M 50/533, H01M 50/242, H01M 50/516, H01M 50/536

(54) **BATTERY MODULE, BATTERY PACK AND VEHICLE COMPRISING SAME**

(30) Priority: 12.11.2024 KR 20240160260
(71) Applicant: LG ENERGY SOLUTION, LTD., Seoul 07335 (KR)
(72) Inventor: YANG, Se-Hyeon, Daejeon 34122 (KR); CHOI, Hyun-Chul, Daejeon 34122 (KR); BAE, Dae-Han, Daejeon 34122 (KR); LEE, Chan-Yeol, Daejeon 34122 (KR)
(74) Representative: Plasseraud IP
(86) International application number: PCT/KR2025/009986
(87) International publication number: WO 2026/106018

(57) **Abstract**

The present disclosure relates to a battery module and battery pack capable of preventing tab disconnection due to swelling of a battery cell, and a vehicle including the same. A battery module and battery pack including a cell assembly configured such that a plurality of battery cells including electrode leads are stacked, wherein the cell assembly includes a plurality of bent portions formed to be bent at predetermined radii on at least one of a plurality of electrode leads arranged along a stacking direction of the plurality of battery cells, and a vehicle including the same are provided.

## Description

### TECHNICAL FIELD

The present disclosure relates to a battery module, a battery pack, and vehicle including the same, and more specifically, to a battery module and battery pack capable of preventing tab disconnection due to swelling of a battery cell, and a vehicle including the same.

This application is based on and claims priority from Korean Patent Application No. 10-2024-0160260, filed on November 12, 2024, with the Korean Intellectual Property Office, the disclosure of which is incorporated herein in its entirety by reference.

### BACKGROUND ART

Secondary batteries, which offer high applicability across a wide range of product categories and possess electrical characteristics such as high energy density, are widely used not only in portable devices but also in electric vehicles (EVs) and hybrid electric vehicles (HEVs) powered by electrical power sources. These secondary batteries are attracting attention as a new energy source for environmental friendliness and energy efficiency, not only because they may dramatically reduce fossil fuel use, but also because they produce no byproducts from energy use.

Currently, widely used secondary batteries include lithium-ion batteries, lithium polymer batteries, nickel-cadmium batteries, nickel-metal hydride batteries, and nickel-zinc batteries. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple secondary batteries in parallel depending on the charge/discharge capacity required for the battery pack. Accordingly, the number of secondary batteries included in the battery pack may be set in various ways depending on the required output voltage or charge/discharge capacity.

A secondary battery may include an electrode assembly in which positive and negative electrode plates are alternately laminated. The positive and negative electrode plates are separated by a separator interposed therebetween. Electrode tabs are connected to these electrode plates depending on their respective polarities. Electrode leads are welded to the electrode tab stack where the electrode tabs gather. To accommodate the high-capacity environment of secondary batteries, techniques of increasing the number and size of electrode tabs and electrode leads have been applied. However, simply increasing the number and/or size of electrode tabs and electrode leads makes it difficult to ensure stable and reliable coupling between the electrode tabs and electrode leads. In addition, as the number and/or size of electrode tabs and electrode leads increases, there is a risk of electrode tab disconnection due to the load in a process of welding the electrode tab and the electrode lead, especially in pouch-type secondary batteries.

Meanwhile, since the electrode tab stack begins very close to the electrode assembly, the welding position of the electrode tab and electrode lead may also be very close to the electrode assembly. Accordingly, the portion of the electrode tab protruding from the electrode assembly is highly susceptible to stress because it is tautly stretched while being inclined at a steep angle. This, in turn, may lead to disconnection when a load is applied to this portion during welding. Furthermore, in this structure, cell swelling of the secondary battery increases the overall width of the cell assembly during use, thereby applying significant stress to the welded electrode lead. This may lead to disconnection in the electrode tab portion, which is tautly stretched and inclined at a steep angle.

Resolving this problem of disconnection in the electrode tab portion due to cell swelling in secondary batteries is crucial for ensuring the stability and lifespan of the battery. Therefore, it is necessary to develop a battery module and battery pack with a structure capable of preventing disconnection in the electrode tab portion even when cell swelling occurs.

### DISCLOSURE

### Technical Problem

The present disclosure is designed to solve the problems of the related art, and therefore the present disclosure is directed to providing a battery module and battery pack equipped with a structure capable of preventing tab disconnection due to battery cell swelling, and a vehicle including the same.

In addition, the present disclosure is also directed to providing a battery module and battery pack equipped with a structure capable of further securing the margin distance of the electrode lead, and a vehicle including the same.

However, the technical problems that the present disclosure seeks to solve are not limited to the above-mentioned problems, and other problems not mentioned above will be clearly understood by those skilled in the art from the description of the invention described below.

### Technical Solution

The present disclosure according to one aspect may include a cell assembly configured such that a plurality of battery cells including electrode leads are stacked, and the cell assembly may include a plurality of bent portions formed to be bent at predetermined radii on at least one of a plurality of electrode leads arranged along a stacking direction of the plurality of battery cells.

For example, the plurality of bent portions may be configured to at least partially unfold according to swelling of the cell assembly.

For example, the plurality of bent portions may be bent in both directions, respectively, along the stacking direction of the plurality of battery cells.

For example, the plurality of bent portions may be configured to be continuously bent so as to be contiguous to each other to form a curved shape as a whole.

For example, the plurality of bent portions may be configured in an S-shape in a cross-section perpendicular to an extended plane of the electrode lead.

For example, the electrode lead having the plurality of bent portions formed thereon may include an electrode lead disposed at the outermost side of the plurality of electrode leads.

For example, the average radius of the plurality of bent portions formed on the electrode leads disposed at the outermost sides may be greater than the average radius of the plurality of bent portions formed on the electrode leads disposed between the electrode leads positioned at the outermost sides of the plurality of electrode leads.

For example, the number of bent portions formed on the electrode leads disposed at the outermost sides may be larger than the average number of bent portions formed on the electrode leads disposed between the electrode leads at the outermost sides of the plurality of electrode leads.

For example, lengths of the electrode leads disposed at the outermost sides of the plurality of electrode leads may be greater than lengths of the remaining electrode leads disposed between them.

For example, the plurality of electrode leads may be disposed to have a symmetrical shape with respect to a center of the stacking direction of the plurality of battery cells.

For example, the plurality of bent portions may be bent by calculating a difference between a length of the electrode lead including curved distances of the respective bent portions and a length of the electrode lead including straight distances of the respective bent portions and setting radii of the respective bent portions.

For example, the battery module may further include a busbar assembly connected to at least one side of the cell assembly, and the busbar assembly may include a busbar frame provided along the stacking direction of the plurality of battery cells, and one or more busbars disposed on the busbar frame and electrically connected to the electrode leads of the plurality of battery cells.

For example, the plurality of bent portions may be positioned in a space between the cell case of the battery cell and the busbar.

For example, the electrode lead may extend outside the busbar frame through an electrode lead slot of the busbar frame, and at least a portion of the plurality of bent portions may be positioned outside the electrode lead slot.

For example, the plurality of bent portions may be continuously bent so as to be contiguous to each other, and among the plurality of bent portions, a bent portion closer to an electrode tab of the battery cell may be bent toward the inside of the cell assembly, and a bent portion positioned relatively far from the electrode tab of the battery cell may be bent toward the outside of the cell assembly.

For example, at least a portion of the plurality of bent portions may unfold according to swelling of the cell assembly, so that the electrode tab is not disconnected.

For example, each battery cell may include an electrode assembly including a positive electrode plate, a negative electrode plate, and a separator interposed therebetween, a cell case configured to accommodate the electrode assembly in an inner space, and an electrode tab including a positive electrode tab and a negative electrode tab connected to the positive electrode plate and the negative electrode plate, respectively.

For example, the electrode leads may protrude in at least one direction from the cell case and be connected to the positive electrode tab and the negative electrode tab, respectively, and the plurality of bent portions may be formed on one or more electrode leads connected to the negative electrode tab.

For example, one or more electrode leads connected to the positive electrode tab may include one bent portion formed thereon.

For example, the plurality of bent portions may be formed on all of one or more electrode leads connected to the positive electrode tab and the negative electrode tab.

In another aspect of the present disclosure, there is provided a battery pack including at least one battery module described above.

In another aspect of the present disclosure, there is provided a vehicle equipped with at least one battery pack described above.

### Advantageous Effects

A battery module and battery pack according to various embodiments of the present disclosure, and a vehicle including the same are capable of preventing disconnection at the welded portion of the electrode tab and electrode lead.

In addition, the battery module and battery pack according to various embodiments, and the vehicle including the same are capable of effectively securing a margin distance of the electrode lead.

However, the effects obtainable from the present disclosure are not limited to the above-mentioned effects, and other effects not mentioned above will be clearly understood by those skilled in the art from the description of the invention described below.

### DESCRIPTION OF DRAWINGS

FIG. 1 is a schematic cross-sectional view of a battery module according to an embodiment of the present disclosure.
FIG. 2 is an enlarged view of area A in FIG. 1, which illustrates a cell assembly of a battery module.
FIG. 3 is an enlarged view of area B in FIG. 2, which illustrates a plurality of bent portions of a cell assembly.
FIG. 4 is a schematic drawing of a battery cell applied to the battery module according to FIG. 1.
FIG. 5 is a cross-sectional view illustrating the internal structure of the battery cell according to FIG. 4.
FIG. 6 is a drawing illustrating a plurality of bent portions deformed by swelling of the cell assembly according to FIG. 2.
FIGS. 7 to 11 are schematic drawings illustrating embodiments of a plurality of bent portions of the cell assembly of the battery module according to FIG. 1.
FIG. 12 is a drawing illustrating an exemplary device for manufacturing bent portions of the aforementioned embodiments.
FIG. 13 is a drawing illustrating a method for setting the radius of the bent portions of the aforementioned embodiments.
FIG. 14 is a schematic drawing illustrating the connection structure between a cell assembly and a busbar assembly of the battery module according to FIG. 1.
FIGS. 15 and 16 are schematic diagrams illustrating embodiments of electrode leads of the cell assembly of the battery module according to FIG. 1.
FIG. 17 is a schematic drawing illustrating a battery pack including the battery module of the aforementioned embodiments.
FIG. 18 is a schematic drawing illustrating a vehicle including the battery pack according to FIG. 17.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, and does not represent the entire scope of the disclosure, so it should be understood that other equivalents and modifications could be made thereto without departing from the scope of the disclosure at the time of filing the present disclosure.

In addition, the present disclosure may include various embodiments. Redundant descriptions of substantially the same or similar configurations will be omitted from respective embodiments, and a description will be made based on differences therebetween.

In addition, for purposes of better understanding the present disclosure, the accompanying drawings are not necessarily drawn to scale, and the dimensions of certain elements may be exaggerated for clarity. In addition, the same reference numerals may indicate the same elements across different embodiments.

Ordinal terms such as "first," "second," and the like may be used to describe various components, but the components are not limited by these terms. These terms are used solely to distinguish one component from another. Therefore, unless explicitly stated otherwise, a first component may be the same as a second component.

Throughout the specification, unless otherwise expressly stated, each component may be singular or plural.

Configuration in which an element is disposed "in the upper portion (or lower portion)" or "at the top (or bottom)" of a target element may indicate that the element may be disposed in contact with the upper surface (or lower surface) of the target element and that another element may be interposed between the target element and the element disposed at the top (or bottom) of the target element.

Additionally, the expression "an element is 'connected,' 'coupled,' or 'joined' to another element" should be understood that the two elements may be directly connected or joined to each other, and that another element may be "interposed" between the two elements, or that the two elements may be "connected," "coupled," or "joined" via another element.

A single element used herein should be construed to encompass a plurality of elements, unless stated otherwise. In this specification, the expression "an element 'is configured as' or 'includes' other elements or steps" should be understood that the element may exclude some other elements or steps and that the element may further include additional elements or steps.

Meanwhile, although terms indicating directions such as up(ward), down(ward), left, right, front(ward), and back(ward) are used in this specification, it is obvious to those skilled in the art to which the present disclosure pertains that these terms are only for convenience of explanation with reference to the relevant drawings and may vary depending on the position, arrangement, or rotation of the target object or the position of the observer.

The present disclosure may be embodied by each of the following embodiments independently. Furthermore, the present disclosure may also be implemented by combining two or more of the following embodiments. Each of the following embodiments may not only be implemented independently, but may also be freely combined with one another.

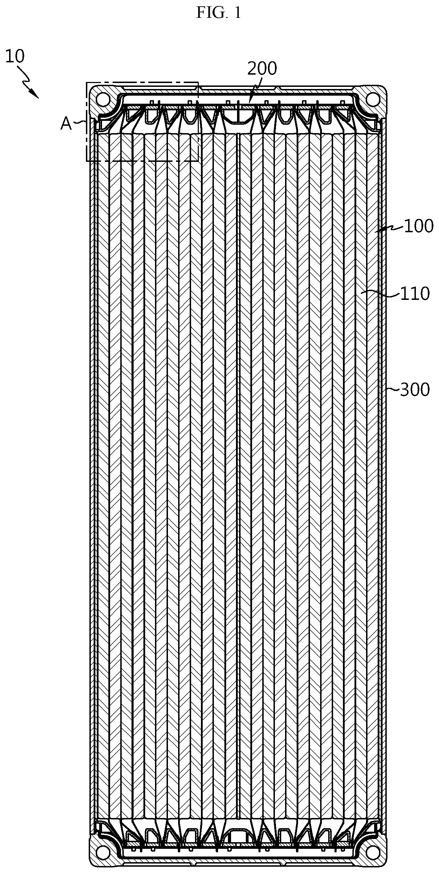

First, the structure of a cell assembly 100 of a battery module 10 according to an embodiment of the present disclosure will be described with reference to FIGS. 1 to 3.

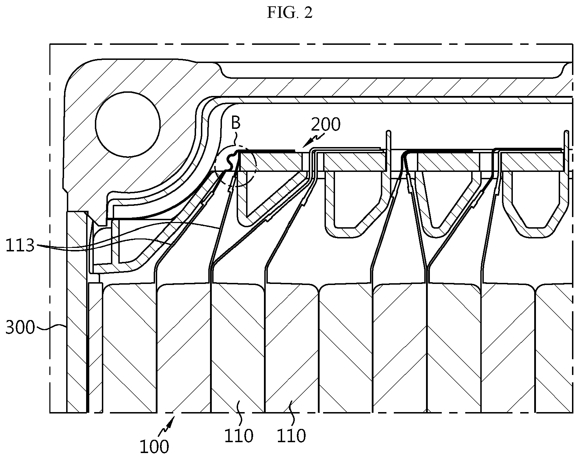

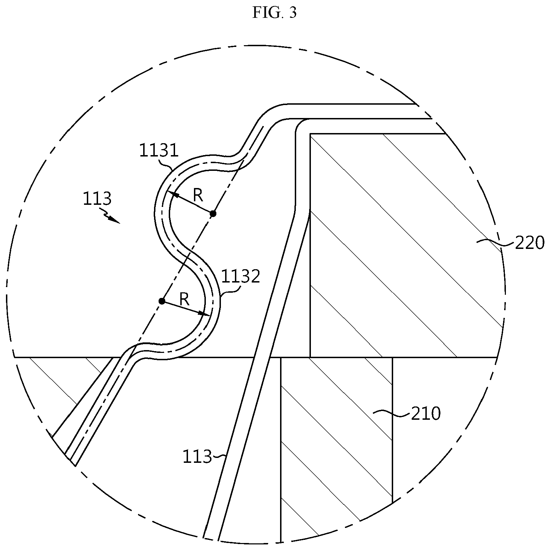

FIG. 1 is a schematic cross-sectional view of a battery module 10 according to an embodiment of the present disclosure. FIG. 2 is an enlarged view of area A in FIG. 1, which illustrates a cell assembly 100 of a battery module 10. FIG. 3 is an enlarged view of area B in FIG. 2, which illustrates a plurality of bent portions 1131 and 1132 of a cell assembly 100.

Referring to FIGS. 1 to 3, a battery module 10 according to an embodiment of the present disclosure includes a cell assembly 100 in which a plurality of battery cells 110 having electrode leads 113 are stacked.

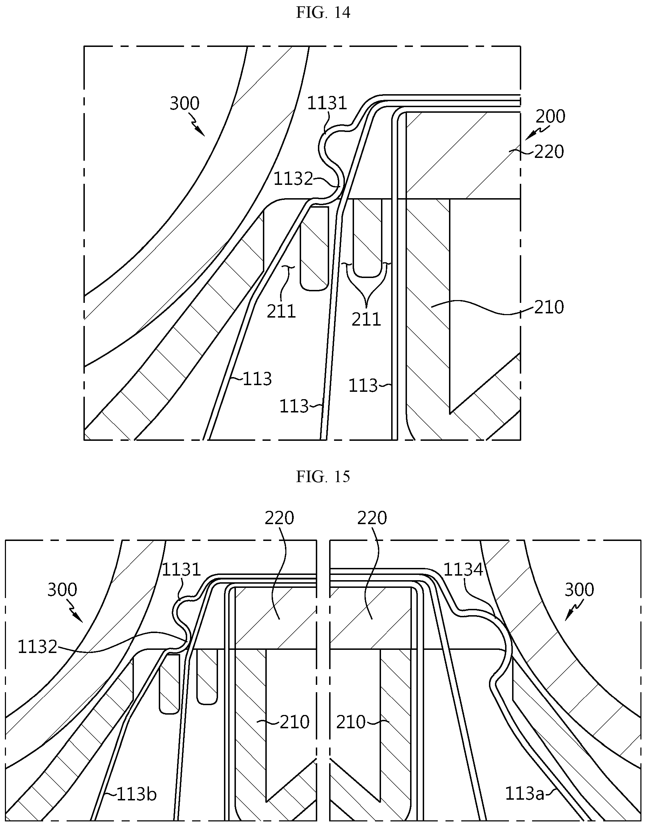

The battery module 10 may include a busbar assembly 200 electrically connected to the cell assembly 100. A detailed structure thereof will be described later with reference to FIG. 14.

In addition, the battery module 10 may include a module case 300 capable of accommodating the cell assembly 100 and the busbar assembly 200 therein. The module case 300 may have any shape as long as it may cover the six sides of the cell assembly 100 and busbar assembly 200.

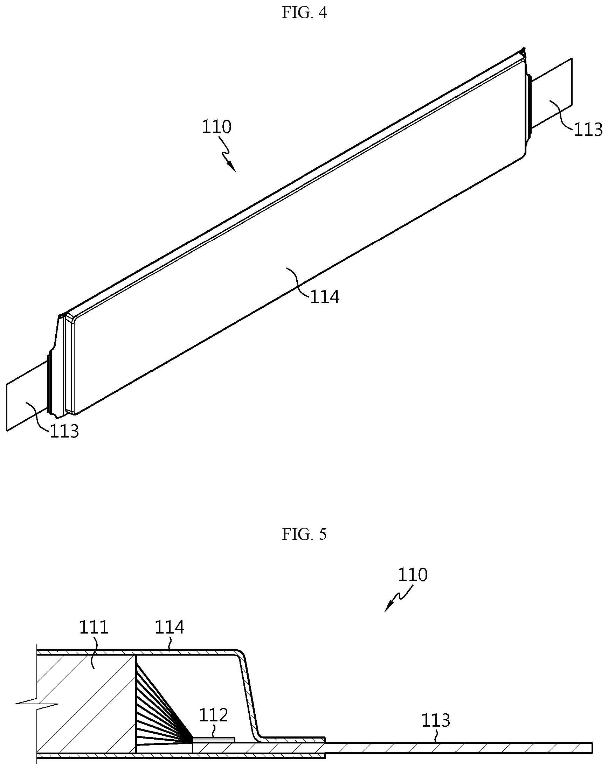

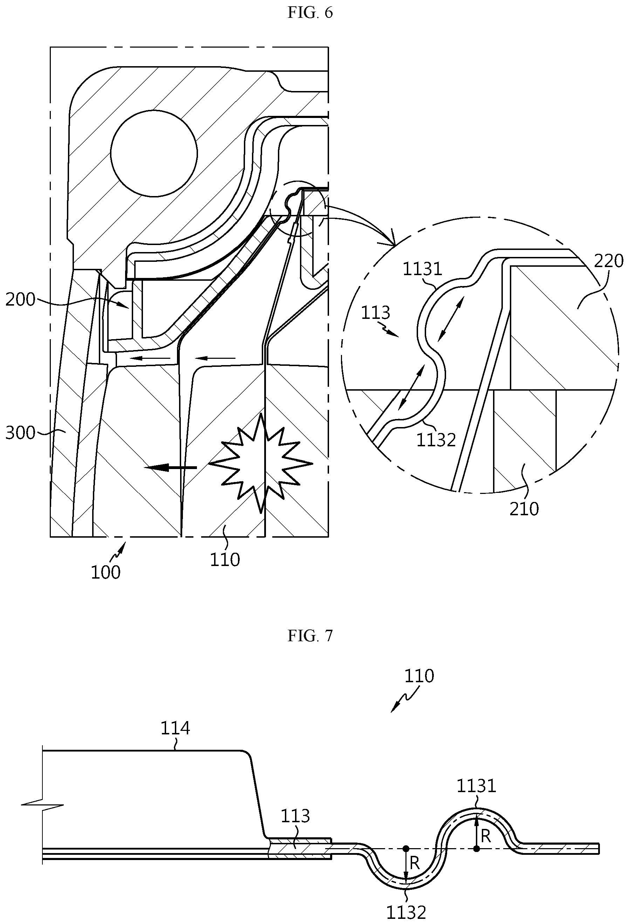

The plurality of battery cells 110 may be pouch-type battery cells, and a detailed structure thereof will be described later with reference to FIGS. 5 and 6. In addition, these pouch-type battery cells may be bidirectionally extendable battery cells in which a pair of electrode leads 113 having first and second polarities extend in opposite directions. The plurality of pouch-type battery cells may be stacked face-to-face to form a single cell assembly 100. In this case, the first polarity may be a positive polarity, and the second polarity may be a negative polarity, or vice versa.

In addition, the cell assembly 100 may be disposed such that the electrode leads 113 provided in each battery cell 110 extend in a direction perpendicular to the ground. That is, the respective battery cells 110 may be disposed upright with its side facing the ground.

As described above, each battery cell 110 may include electrode leads 113, and these electrode leads 113 may be arranged along the stacking direction of the battery cells 110. This allows for efficient electrical connection between the battery cells 110 within the cell assembly 100.

One or more of the plurality of electrode leads 113 may include a plurality of bent portions 1131 and 1132 that are bent to have a specific shape. The plurality of bent portions 1131 and 1132 may be designed to provide flexibility to the electrode lead 113 and prevent damage to the electrode lead 113 due to physical stress caused by various external factors, such as thermal expansion and mechanical deformation, within the cell assembly 100.

The plurality of bent portions 1131 and 1132 may be formed at specific positions on the electrode lead 113, thereby providing the electrode lead 113 with the necessary flexibility and strength. For example, the shape and position of the plurality of bent portions 1131 and 1132 may contribute to extending the fatigue life of the electrode lead 113 by optimizing stress distribution. The plurality of bent portions 1131 and 1132 may be implemented in various shapes, such as a V-shape, a U-shape, or an arc shape, thereby enabling the electrode lead 113 to be designed to better withstand shock and vibration.

The plurality of bent portions 1131 and 1132 may each be designed to have a constant radius. That is, the plurality of bent portions 1131 and 1132 may each be designed to have a constant curvature, thereby alleviating stress concentration that may be caused by abrupt changes in the curvature of the electrode lead 113. This may serve to maintain a balanced strength and flexibility of the electrode lead 113 and ensure that physical stress is evenly distributed even when the electrode lead 113 is subjected to external vibration or impact, thereby stably maintaining the performance of the battery module 10 under long-term use.

The plurality of bent portions 1131 and 1132 are formed to secure a margin distance between the electrode lead 113 and a component connected thereto in the event of cell swelling. Cell swelling is a phenomenon in which the battery cell expands as the internal pressure of the battery cell 110 increases or temperature changes, thereby applying additional stress to the electrode lead 113. To sufficiently maintain the margin distance of the electrode lead 113 during such swelling, a bending structure may be applied to the electrode lead 113, thereby providing a predetermined extra length.

When a margin distance for the electrode lead 113 is to be secured using only a single bent portion, rather than a plurality of bent portions 1131 and 1132, implementing the margin distance required for minimal stress relief with a single bent portion requires a large radius of the bent portion, occupying a large space, which is problematic.

That is, to provide sufficient margin distance to accommodate swelling using only a single bent portion, the bent portion must have a large radius. As a result, an unnecessarily large layout space would be required around the electrode lead 113, potentially reducing space utilization within the battery module 10.

To avoid this problem, the battery module 10 according to an embodiment of the present disclosure may be configured to include a plurality of bent portions 1131 and 1132, each bent to have a constant radius R. By providing a plurality of bent portions 1131 and 1132, each bent portion 1131 or 1132 may be designed with a relatively small radius R to secure the required margin distance. Therefore, the plurality of bent portions 1131 and 1132 may occupy less space overall within the battery module 10, thereby increasing the degree of integration in the battery cell 110 and enhancing space utilization.

In addition, by providing a plurality of bent portions 1131 and 1132, the electrode lead 113 may have a structure capable of more effectively distributing stress caused by cell swelling across the bent portions 1131 and 1132. This structure may allow the electrode lead 113 to respond more flexibly to excessive tensile force due to cell swelling, thereby reducing fatigue damage to the electrode lead 113 and preventing disconnection at a joint between the electrode lead 113 and other components.

Next, the specific structure of the battery cell 110 applied to the present disclosure will be described with reference to FIGS. 4 and 5.

FIG. 4 is a schematic drawing of a battery cell 110 applied to the battery module 10 according to FIG. 1. FIG. 5 is a cross-sectional view illustrating the internal structure of the battery cell 110 according to FIG. 4. FIG. 5 illustrates an electrode lead 113 without a plurality of bent portions 1131 and 1132.

Referring to FIGS. 4 and 5, the battery cell 110 includes an electrode assembly 111, an electrode tab 112, an electrode lead 113, and a cell case 114.

The electrode assembly 111 includes positive and negative electrode plates, which are alternately laminated, and a separator interposed therebetween. An electrode tab 112 may be connected to each electrode plate so as to protrude from the electrode assembly 111, depending on its polarity.

Electrode leads 113 may be connected to electrode tabs 112, including a positive electrode tab and a negative electrode tab provided in the electrode assembly 111, and may extend in specific directions. In this case, the electrode lead 113 connected to the positive electrode tab has a positive polarity, and the electrode lead 113 connected to the negative electrode tab has a negative polarity. These electrode leads 113 may extend outward from the cell case 114.

The cell case 114 may be configured as a laminate sheet in which a resin layer, a metal layer, and a resin layer are sequentially laminated. The cell case may accommodate the electrode assembly 111 and then be sealed by heat fusion or the like. Before the cell case 114 is sealed by heat fusion or the like, an electrolyte is injected, along with the electrode assembly 111, into the cell case 114. With the electrode assembly 111 and the electrolyte accommodated within the cell case 114, the outer surface of the cell case 114 is heat fused to seal the same. In this case, the cell case 114 may be configured such that a portion of the laminate sheet is recessed to accommodate the electrode assembly 111, and the metal layer may be made of aluminum.

The electrode tab 112 is a component for connecting the electrode assembly 111 and the electrode lead 113 to enable current flow. The electrode tabs 112 may protrude from the electrode assembly 111, be pulled at a certain angle so as to be gathered together, and then compressed to be welded to the electrode lead 113. In this case, the connection point between the electrode tab 112 and the electrode lead 113 of the battery cell 110, i.e., the welded area, may be sensitive to the expansion of the battery cell 110, i.e., cell swelling. When gas is generated within the battery cell 110 as it is repeatedly charged and discharged, or when the battery cell 110 expands due to a temperature increase, significant stress is applied to the welded area. In particular, cracks may occur at the welded area due to metal fatigue, or the electrode tab 112 or electrode lead 113 may gradually deform, leading to disconnection at the welded area. The present disclosure proposes providing a plurality of bent portions 1131 and 1132 on the electrode lead 113 to prevent such disconnection.

Hereinafter, the deformation process of the plurality of bent portions 1131 and 1132 according to an embodiment of the present disclosure to prevent disconnection at the welded area will be described with reference to FIG. 6.

FIG. 6 is a drawing illustrating a plurality of bent portions 1131 and 1132 deformed by swelling of the cell assembly 100 according to FIG. 2.

Referring to the descriptions of FIGS. 4 and 5, and FIG. 6, the plurality of bent portions 1131 and 1132 may be configured to at least partially unfold as the cell assembly 100 swells.

During cell swelling, one or more battery cells 110 may expand, thereby increasing the overall width of the cell assembly 100. Therefore, at least some of the plurality of electrode leads 113 arranged along the stacking direction of the cell assembly 100 may be displaced in the expansion direction in which the overall width of the cell assembly 100 increases, due to the expansion of the battery cells 110 resulting from cell swelling. Depending on the displacement of the battery cell 110, excessive tensile force may be applied to the electrode lead 113.

In this case, since the electrode lead 113 of the cell assembly 100 according to the present embodiment has a plurality of bent portions 1131 and 1132, an electrode lead margin may be secured to effectively accommodate cell swelling. As a result, the respective bent portions 1131 and 1132 may deform and naturally unfold, thereby dispersing the stress applied to the electrode lead 113 and reducing the risk of disconnection or fatigue damage.

Therefore, in the event of cell swelling in which a battery cell 110 expands due to gas generated within the battery cell 110 in the cell assembly 100, caused by overcharging, overheating, external impact, or the like, the mechanical stress applied to the electrode lead 113 may be effectively alleviated.

FIGS. 7 to 11 are schematic drawings illustrating embodiments of a plurality of bent portions 1131, 1132, and 1133 of the cell assembly 100 of the battery module 10 according to FIG. 1.

Referring to FIGS. 7 to 11, the cell assembly 100 of the battery module 10 according to an embodiment of the present disclosure may include one or more electrode leads 113 formed with a plurality of bent portions 1131, 1132, and 1133 having various shapes or bending directions.

The plurality of bent portions 1131, 1132, and 1133 may be configured at various angles and shapes at different positions on the electrode lead 113, and may be designed to effectively respond to various stress conditions, such as expansion of the battery cell 110, external impact, and vibration, or to space utilization.

One or more electrode leads 113 may be bent multiple times at different positions depending on the stacking direction of the plurality of battery cells. In this case, as the number of bends increases, the radius of each bent portion 1131 or 1132 may decrease.

For example, in the case where the radius of a single bent portion formed on the electrode lead 113, required to secure a margin distance, is approximately 2 mm, when two bent portions 1131 and 1132 are formed, each may be designed to have a radius of approximately 1 mm from the extended plane of the electrode lead 113. That is, when two bent portions 1131 and 1132 having a radius of approximately 1 mm are formed, the space occupied within the battery module 10 in the stacking direction of the plurality of battery cells 110 may be reduced, compared to the case where a single bent portion having a radius of approximately 2 mm is formed, thereby resulting in relatively high space utilization. In addition, by providing two bent portions 1131 and 1132 having a radius of approximately 1 mm, compared to the case where a single bent portion having a radius of approximately 2 mm is formed, the tensile force applied to the electrode lead 113 may be effectively distributed across the bent portions 1131 and 1132, thereby effectively accommodating swelling and external impact of the battery cell 110.

As an embodiment, the plurality of bent portions 1131, 1132, and 1133 may each be bent in at least one direction along the stacking direction of the plurality of battery cells 110. That is, the plurality of bent portions 1131 and 1132 may each be bent at least once in the same or different directions, thereby effectively dispersing the mechanical stress on the electrode lead 113.

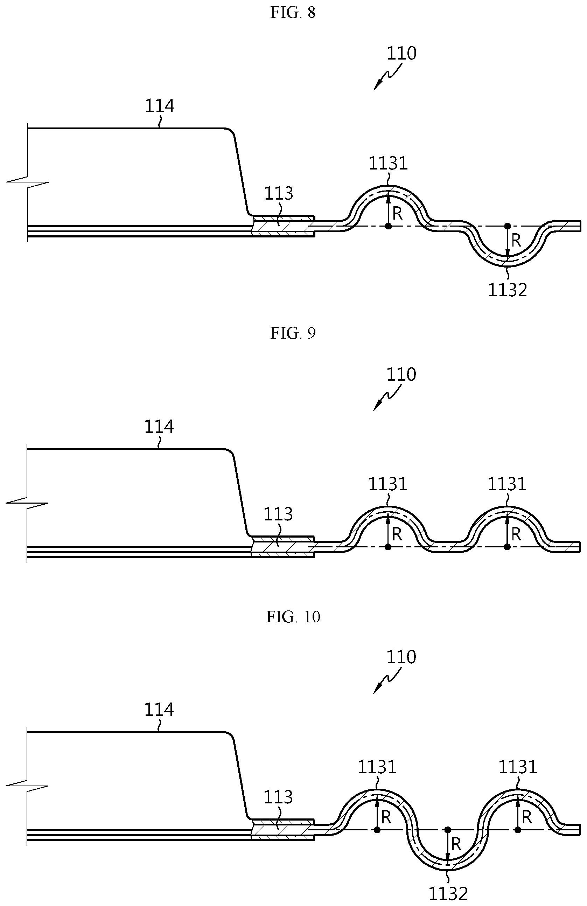

The plurality of bent portions 1131, 1132, and 1133 may be bent continuously so as to be contiguous to each other to form a curved shape as a whole. This continuous bending allows the electrode lead 113 to be designed and deformed more flexibly. That is, the plurality of bent portions 1131, 1132, and 1133 may be designed to have predetermined radii, respectively, and at least an S-shape in a cross-section perpendicular to the extended plane of the electrode lead 113. For example, as illustrated in FIG. 7, a bent portion 1131 bent to have a radius R in one direction and a bent portion 1132 bent to have a radius R in the opposite direction may be formed continuously, thereby forming a curved shape as a whole. In addition, as illustrated in FIG. 10, a bent portion 1131 bent to have a radius R in one direction, a bent portion 1132 bent to have a radius R in the opposite direction, and a bent portion 1131 bent again to have a radius R in the opposite direction thereof may be formed continuously, thereby forming a curved shape as a whole. Although not shown, it is also possible to continuously form a bent portion 1131 bent to have a radius R in one direction and a bent portion 1131 bent to have a radius R in the same direction.

In addition, the plurality of bent portions 1131, 1132, and 1133 may be configured to be spaced apart from each other by a predetermined distance. This may optimize stress transfer among the bent portions 1131, 1132, and 1133, thereby simultaneously increasing the mechanical strength and flexibility of the electrode lead 113. Therefore, the respective bent portions 1131, 1132, and 1133 may operate independently of one another, evenly dispersing the stress applied to the electrode lead 113. For example, as illustrated in FIG. 8, a bent portion 1131 bent to have a radius R in one direction may be formed, and then another bent portion 1132 bent to have a radius R in the opposite direction may be formed at a position spaced a predetermined distance apart from that, thereby allowing the bent portions to deform independently of each other. In addition, as illustrated in FIG. 9, after a bent portion 1131 bent to have a radius R in one direction is formed, another bent portion 1131 bent to have a radius R in the same direction may be formed at a position spaced a predetermined distance apart from that, such that they may be configured to deform independently of each other.

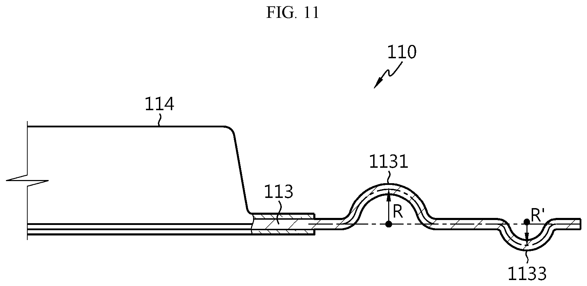

In addition, the plurality of bent portions 1131, 1132, and 1133 may be configured to have the same radius to ensure the same margin distance. In addition, they may be configured to have different radii to ensure different margin distances, as needed. For example, as illustrated in FIG. 11, after a bent portion 1131 bent to have a radius R in one direction is formed, another bent portion 1133 bent to have a radius R' (e.g., R>R') in the opposite direction may be formed at a position spaced a predetermined distance apart from that, but the disclosure is not limited to the illustrated example. A plurality of bent portions 1131, 1132, and 1133 having the same radius enable uniform stress distribution across the electrode leads 113, allowing for more effective management of stress generated during cell swelling. On the other hand, a plurality of bent portions 1131, 1132, and 1133 having different radii may be designed to meet specific requirements, and the bent portions may have different margin distances from each other, thereby effectively accommodating more complex mechanical environments.

Thus, the radii of the bent portions 1131, 1132, and 1133 may be adjusted in consideration of space constraints or loads in specific areas within the battery module 10, thereby maintaining optimal performance.

Referring back to FIGS. 1 to 3, embodiments of the plurality of bent portions 1131, 1132, and 1133 based on the positions of the plurality of electrode leads 113 within the battery module 10 will now be described.

First, among the plurality of electrode leads 113, the electrode leads 113 positioned at the outermost sides may be designed to have a greater length than the other electrode leads 113 positioned between them. The plurality of electrode leads 113 may be provided to gradually increase in length from the center of the cell assembly 100 toward the outermost side, along the stacking direction of the plurality of battery cells 110. This is due to the fact that, when cell swelling occurs, the electrode lead 113 positioned at the outermost side is likely to experience the greatest displacement, and thus, is likely to experience the greatest mechanical stress and deformation.

The plurality of electrode leads 113 may be disposed to have an overall symmetrical shape relative to the center of the stacking direction of the plurality of battery cells 110. Accordingly, the different stresses applied to the respective electrode leads 113 may be effectively reduced, thereby reducing the risk of damage or disconnection that may occur at the joint of the electrode tab 112, the electrode lead 113, and the busbar 220.

An electrode lead 113 having a plurality of bent portions 1131 and 1132, among the plurality of electrode leads 113, may include one or more electrode leads 113 disposed at the outermost sides of the plurality of electrode leads 113.

That is, one or more electrode leads 113 disposed at the outermost sides of the plurality of electrode leads 113 may have a plurality of bent portions 1131 and 1132. The plurality of bent portions 1131 and 1132 may be bent so that, when cell swelling occurs, the outermost electrode leads 113 experience the greatest displacement, thereby ensuring sufficient electrode lead margin within the battery module 10 and allowing the electrode leads 113 to be arranged without interference problems such as tangling or twisting between adjacent electrode leads 113.

As a result, the bent portion of the electrode lead 113, which experiences the greatest deformation due to the expansion of the battery cell 110 caused by cell swelling, may be at least partially stretched, thereby effectively minimizing the cell swelling force applied toward the electrode lead 113. This may effectively prevent risks such as the electrode lead 113 being detached from the busbar 220, which will be described later, or short circuits at the joint of the electrode lead 113 and the electrode tab 112 during cell swelling.

The plurality of bent portions 1131 and 1132 may be formed not only on the outermost electrode leads 113, but also on the electrode leads 113 positioned between them. In this case, among the plurality of electrode leads 113, the average radius R of the plurality of bent portions 1131 and 1132 formed on one or more electrode leads 113 positioned at the outermost sides may be greater than the average radius R of the plurality of bent portions 1131 and 1132 formed on the electrode leads 113 positioned between the outermost electrode leads 113. This is intended to secure the minimum margin distance required because the outermost electrode lead 113 is subject to the greatest tensile force.

In addition, for the same reason, among the plurality of electrode leads 113, the number of bends formed on the outermost electrode leads 113, i.e., the number of the bent portions 1131 and 1132, may be configured to be larger than the average number of the bent portions 1131 and 1132 formed on the electrode leads 113 disposed between the outermost electrode leads 113.

Therefore, the battery module 10 according to an embodiment of the present disclosure may effectively improve the durability of the overall battery module 10 by increasing the margin distance of the outermost electrode lead 113 that may experience the greatest positional distortion due to pressure deformation during cell swelling.

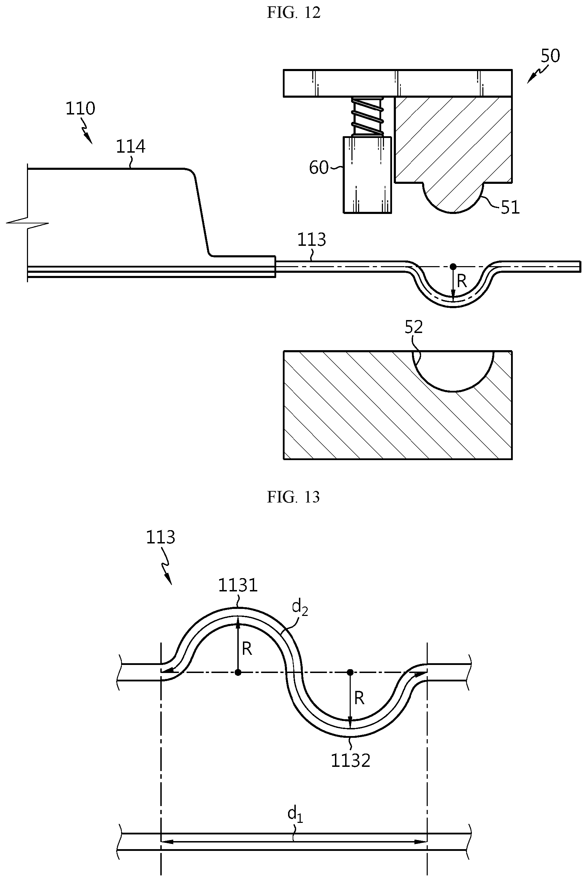

Hereinafter, a method for forming the plurality of bent portions 1131 and 1132 according to an embodiment of the present disclosure will be described with reference to FIGS. 12 and 13.

FIG. 12 is a drawing illustrating an exemplary device for manufacturing a plurality of bent portions 1131 and 1132 according to the aforementioned embodiments, and FIG. 13 is a drawing illustrating a method for setting the radii of the bent portions of the aforementioned embodiments.

Referring to FIG. 12, the plurality of bent portions 1131 and 1132 may be formed using a pressing jig 50. In this case, the pressing jig 50 is designed to have a convex portion 51 and a concave portion 52, so that the electrode lead 113 may be pressed into a desired shape. For example, the pressing jig 50 may have a shape corresponding to a plurality of bent portions 1131 and 1132 having a predetermined radius R. In addition, the pressing jig 50 may have a shape corresponding to a single bent portion having a constant radius R, so that a plurality of bent portions 1131 and 1132 may have various radii or positions, respectively.

In this case, before placing the electrode lead 113 on the pressing jig 50, the electrode lead 113 may be pre-pressed by a pre-pressing jig 60, thereby fixing the same. The pre-pressing jig 60 may help to stably maintain the initial shape of the electrode lead 113, thereby enabling more precise forming operations on the pressing jig 50. This two-step pressing process may improve the bending quality of the electrode lead 113.

In addition, the combined use of the pressing jig 50 and the pre-pressing jig 60 enables precise adjustment of the position and angle of the electrode lead 113, so that the plurality of bent portions 1131 and 1132 effectively secure the required curvature and margin distance.

In addition, the design of the convex portion 51 and concave portion 52 of the pressing jig 50 may enhance the formability of the electrode lead 113 and effectively distribute and reduce the tensile force applied to the electrode lead 113. The convex portion 51 and concave portion 52 may be designed to uniformly control the curvature and thickness of the electrode lead 113, thereby minimizing the mechanical stress applied to the electrode lead 113 during the forming process, and particularly, to prevent stress concentration due to the complex shape. As a result, it is possible to suppress cracking and fatigue damage to the electrode lead 113 and enhance the deformation resistance of the electrode lead 113, thereby further enhancing the durability of the battery module 10. However, the present disclosure is not limited to the forming method of the plurality of bent portions 1131 and 1132 described above, and various other design methods capable of improving the formability and durability of the electrode lead 113 may be employed.

Referring to FIG. 13, a plurality of bent portions 1131 and 1132 according to an embodiment of the present disclosure may be designed by calculating the length d₂ of the electrode lead 113 obtained by summing the curved distances of the bent portions, and the length d₁ of the electrode lead 113 obtained by summing the straight distances of the bent portions.

The plurality of bent portions 1131 and 1132 may be formed to be continuous or spaced apart from each other by a predetermined distance, and arranged along the longitudinal direction of the electrode lead 113. Each of the bent portions 1131 and 1132 may have a curved distance and straight distance, based on the points where bending begins and ends on the electrode lead 113. Through this structural configuration, the difference between the length d₂ including the curved distances and the length d₁ including the straight distances, among the total length of the electrode lead 113, may be calculated. This ensures sufficient margin distance to prevent tab disconnection during cell swelling.

Therefore, the radius R of each bent portion 1131 or 1132 may be configured to have a minimum margin distance capable of effectively distributing the mechanical stress, generated during cell swelling, across the electrode lead 113. This may prevent unnecessary space occupancy and excessive process consumption, while maintaining the minimum radius of the bent portions 1131 and 1132 to alleviate stress concentration. This design approach ensures optimal structural stability capable of preventing damage to the electrode lead 113, when internal cell pressure increases, while addressing deformation requirements within the electrode lead 113, and contributing to improvement of reliability and long-term lifespan of the battery module.

FIG. 14 is a schematic drawing illustrating the connection structure between a cell assembly 100 and a busbar assembly 200 of the battery module 10 according to FIG. 1

Referring to FIG. 14, the battery module 10 may further include a busbar assembly 200 connected to at least one side of the cell assembly 100.

The busbar frame assembly 200 may be coupled to at least one side of the cell assembly 100, and may include a busbar frame 210 and one or more busbars 220 installed on the busbar frame 210. Here, the busbar 220 may be made of a metal material, such as copper, silver, tin, or plated copper, which has electrical conductivity, and may safely conduct current. The electrode lead 113 may be tightly attached and welded to the busbar 220 to be electrically connected thereto. In addition, the busbar frame 210 may be made of an insulating material to provide electrical insulation.

The busbar frame 210 may be disposed on at least one side of the cell assembly 100 and may include a plurality of electrode lead slots 211 to allow electrode leads 113 provided to the battery cells 110 to extend outside the busbar frame 210. A plurality of battery cells 110 may be divided into, for example, a plurality of groups including a plurality of battery cells, and the electrode leads 113 provided to the plurality of battery cells 110 belonging to the same group may extend outside the busbar frame 210 through the same electrode lead slot 211. In addition, the electrode leads 113 extending to the outside through the same electrode lead slot 211 may be attached to the same busbar 220 by welding or the like.

As an example, when the electrode leads 113 of the battery cells 110 extend in both directions, the busbar frame assembly 200 may be connected to both sides of the cell assembly 100. The electrode leads 113 provided in adjacent battery cells 110 may extend outward through a single electrode lead slot 211 so as to be connected to the same busbar 220. In this case, the electrode leads 113 belonging to the same group may have the same polarity. For example, they may have a first polarity, i.e., positive polarity. The number and polarity of the electrode leads 113 extending through a single electrode lead slot 211 may vary depending on the series and parallel connection relationships of the plurality of battery cells 110 within the cell assembly 100.

In the battery module 10 according to the present disclosure, at least a portion of the plurality of bent portions 1131 and 1132 may be positioned outside the electrode lead slot 211 to optimize space efficiency and prevent interference with other components. This positioning may contribute to optimizing the spatial arrangement of the electrode leads 113 within the battery module 10, maximizing the space efficiency of the entire battery module 10, and minimizing physical interference with surrounding components.

For example, among the plurality of bent portions 1131 and 1132, the bent portion 1132 closer to the electrode tab 112 of the battery cell 110 may be bent toward the inside of the cell assembly 100, and the bent portion 1131 provided relatively far from the electrode tab 112 may be bent toward the outside of the cell assembly 100, or vice versa. As described above, it is possible to prevent the electrode leads 113 from contacting each other and interfering with each other by changing the orientation of the plurality of bent portions 1131 and 1132. In addition, physical interference with other electrical configurations may be prevented depending on the positions of the electrode leads 113, thereby improving the space utilization of the battery module 10.

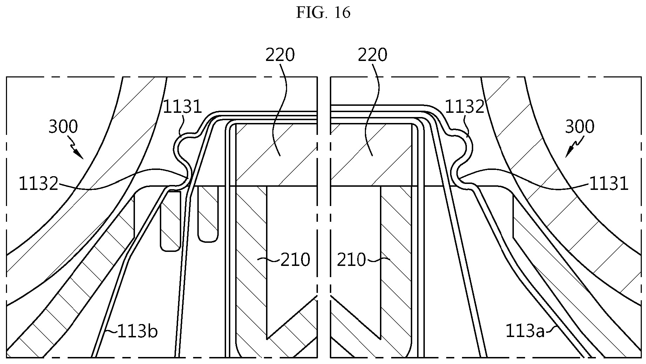

FIGS. 15 and 16 are schematic drawings illustrating other embodiments of the battery module 10 according to FIG. 1.

As described above in FIGS. 4 and 5, a pair of electrode leads 113 may protrude in at least one direction from the cell case 114 of the battery cell 110 and may be connected to the positive electrode tab and the negative electrode tab, respectively.

In this case, a plurality of bent portions 1131 and 1132 may be formed on at least one electrode lead 113b connected to the negative electrode tab. In lithium-ion batteries, the negative electrode plate plays a key role in storing lithium ions. When cell swelling occurs, the material movement and volume expansion of the negative electrode plate may be relatively greater than those of the positive electrode plate. Due to this cell swelling phenomenon, the electrode lead 113b, which is connected to the negative electrode tab, among the plurality of electrode leads 113b, may be subject to high tensile stress.

In particular, due to the material differences between the positive electrode lead 113a and the negative electrode lead 113b, the negative electrode lead 113b may experience greater stress during swelling. For example, the negative electrode lead 113b is typically made of copper (Cu)-based material, which is more flexible than aluminum (Al), and this characteristic requires the negative electrode lead to accommodate greater deformation during cell swelling, so it may be more susceptible to mechanical stress. Copper has high electrical conductivity, but its lower coefficient of thermal expansion compared to aluminum makes it prone to stress concentration under high stress.

In addition, the negative electrode lead 113b may be designed to be relatively thin, which makes it easier for tensile and bending stresses to accumulate during cell swelling. This thin structure may affect the structural stability of the battery cell 110 when internal pressure thereof increases, making the negative electrode lead 113b more susceptible to damage than the positive electrode lead 113a. On the other hand, the positive electrode lead 113a is typically made of a material such as aluminum, which makes it lightweight and strong, so the positive electrode lead may have relatively high resistance to tensile deformation due to cell swelling.

As a result, due to the differences in material properties and structural design, the negative electrode lead 113b is likely to experience higher mechanical stress during cell swelling. Therefore, by providing a plurality of bent portions 1131 and 1132 to the negative electrode lead 113b, which may experience relatively higher stress, the overall stress may be effectively controlled.

In this case, one or more electrode leads 113a connected to the positive electrode tab may have a single bent portion 1134 having a larger radius to secure a sufficient margin distance. Alternatively, one or more electrode leads 113a connected to the positive electrode tab may also have a plurality of bent portions 1131 and 1132 to increase the overall space utilization within the battery module 10.

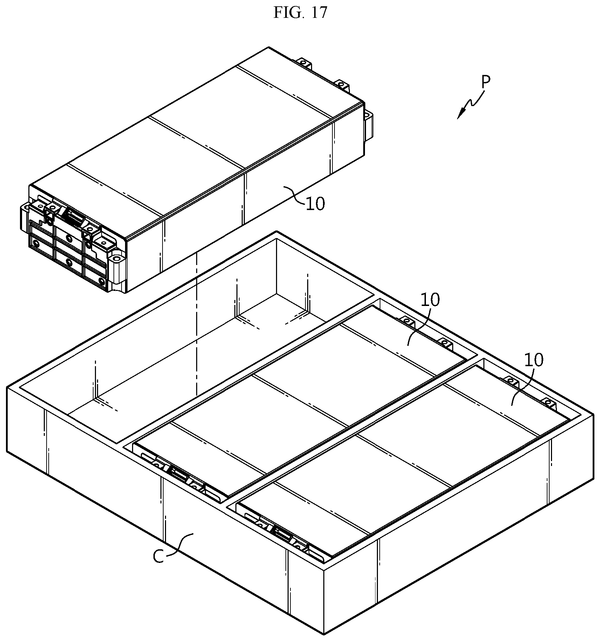

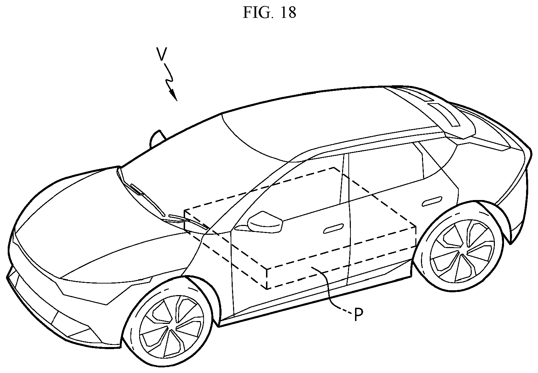

FIG. 17 is a schematic drawing illustrating a battery pack P according to an embodiment of the present disclosure, and FIG. 18 is a schematic drawing illustrating a vehicle V according to an embodiment of the present disclosure.

Referring to FIG. 17, the battery pack P according to an embodiment of the present disclosure may include one or more battery modules 10 according to the previous embodiments and a pack case C accommodating them.

The battery pack P according to an embodiment of the present disclosure may further include various other components of the battery pack P, which are known at the time of filing of the present disclosure. For example, the battery pack P according to an embodiment of the present disclosure may further include components such as a current sensor, a fuse, and a service plug.

Referring to FIG. 18, the vehicle V according to an embodiment of the present disclosure may include one or more battery packs P according to the present disclosure. In addition, the vehicle V according to an embodiment of the present disclosure may further include various other components included in the vehicle, in addition to the battery pack P. For example, the vehicle V according to an embodiment of the present disclosure may further include a car body, a motor, a control device such as an electronic control unit (ECU), and the like, in addition to the battery pack P according to an embodiment of the present disclosure.

In addition, the battery pack P according to an embodiment of the present disclosure may also be installed in other devices, apparatus, and equipment, such as an energy storage system (ESS) utilizing a secondary battery, in addition to the vehicle V.

According to the various embodiments described above, a battery module 10 capable of preventing tab disconnection during cell swelling, and a battery pack P and vehicle V including the same may be provided.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

### [Description of reference numerals]

10: Battery module
100: Cell assembly
110: Battery cell
111: Electrode assembly
112: Electrode tab
113: Electrode lead
113a: Positive electrode lead
113b: Negative electrode lead
1131, 1132, 1133, 1134: Bent portion
114: Cell case
200: Busbar assembly
210: Busbar frame
211: Electrode lead slot
220: Busbar
300: Module case
50: Pressing jig
51: Convex portion
52: Concave portion
60: Free pressing jig
P: Battery pack
C: Pack case
V: Vehicle
R, R': Radius

## Claims

1. A battery module comprising:
a cell assembly configured such that a plurality of battery cells comprising electrode leads are stacked,
wherein the cell assembly comprises a plurality of bent portions formed to be bent at predetermined radii on at least one of a plurality of electrode leads arranged along a stacking direction of the plurality of battery cells.

2. The battery module of claim 1,
wherein the plurality of bent portions are configured to at least partially unfold according to swelling of the cell assembly.

3. The battery module of claim 1,
wherein the plurality of bent portions are bent in both directions, respectively, along the stacking direction of the plurality of battery cells.

4. The battery module of claim 3,
wherein the plurality of bent portions are configured to be continuously bent so as to be contiguous to each other to form a curved shape as a whole.

5. The battery module of claim 1,
wherein the plurality of bent portions are configured in an S-shape in a cross-section perpendicular to an extended plane of the electrode lead.

6. The battery module of claim 1,
wherein the plurality of bent portions are configured to be bent by calculating a difference between a length of the electrode lead including curved distances of the respective bent portions and a length of the electrode lead including straight distances of the respective bent portions and setting radii of the respective bent portions.

7. The battery module of claim 1,
wherein the electrode lead having the plurality of bent portions formed thereon comprises an electrode lead disposed at an outermost side of the plurality of electrode leads.

8. The battery module of claim 7,
wherein an average radius of the plurality of bent portions formed on the electrode leads disposed at the outermost sides is greater than an average radius of the plurality of bent portions formed on the electrode leads disposed between the electrode leads positioned at the outermost sides of the plurality of electrode leads.

9. The battery module of claim 7,
wherein a number of bent portions formed on the electrode leads disposed at the outermost sides is larger than an average number of bent portions formed on the electrode leads disposed between the electrode leads disposed at the outermost sides of the plurality of electrode leads.

10. The battery module of claim 1,
wherein lengths of the electrode leads disposed at the outermost sides of the plurality of electrode leads are greater than lengths of the remaining electrode leads disposed between them.

11. The battery module of claim 1,
wherein the plurality of electrode leads are disposed to have a symmetrical shape with respect to a center of the stacking direction of the plurality of battery cells.

12. The battery module of claim 1, further comprising:
a busbar assembly connected to at least one side of the cell assembly,
wherein the busbar assembly comprises:
a busbar frame provided along the stacking direction of the plurality of battery cells; and
one or more busbars disposed on the busbar frame and electrically connected to the electrode leads of the plurality of battery cells,
wherein the plurality of bent portions are positioned in a space between the cell case of the battery cell and the busbar.

13. The battery module of claim 1, further comprising
a busbar assembly connected to at least one side of the cell assembly,
wherein the busbar assembly comprises a busbar frame provided along the stacking direction of the plurality of battery cells,
wherein the electrode lead is configured to extend outside the busbar frame through an electrode lead slot of the busbar frame, and
wherein at least a portion of the plurality of bent portions is positioned outside the electrode lead slot.

14. The battery module of claim 13,
wherein the plurality of bent portions are continuously bent so as to be contiguous to each other, and
wherein, among the plurality of bent portions, a bent portion closer to an electrode tab of the battery cell is bent toward an inside of the cell assembly, and a bent portion positioned relatively far from the electrode tab of the battery cell is bent toward an outside of the cell assembly.

15. The battery module of claim 14,
wherein the plurality of bent portions are configured such that at least a portion thereof unfolds according to swelling of the cell assembly, so that the electrode tab is not disconnected.

16. The battery module of claim 1,
wherein each battery cell comprises:
an electrode assembly comprising a positive electrode plate, a negative electrode plate, and a separator interposed therebetween;
a cell case configured to accommodate the electrode assembly in an inner space; and
an electrode tab comprising a positive electrode tab and a negative electrode tab connected to the positive electrode plate and the negative electrode plate, respectively,
wherein the electrode leads are configured to protrude in at least one direction from the cell case and be connected to the positive electrode tab and the negative electrode tab, respectively, and
wherein the plurality of bent portions are formed on one or more electrode leads connected to the negative electrode tab.

17. The battery module of claim 16,
wherein one or more electrode leads connected to the positive electrode tab comprise one bent portion formed thereon.

18. The battery module of claim 16,
wherein the plurality of bent portions are formed on all of the one or more electrode leads connected to the positive electrode tab and the negative electrode tab.

19. A battery pack comprising a battery module according to any one of claims 1 to 18.

20. A vehicle equipped with at least one battery pack according to claim 19.
